# EUROPEAN PATENT APPLICATION

(11) **EP 4 009 464 A1**
(43) Date of publication of application: **08.06.2022**
(21) Application number: 21207935.4
(22) Date of filing: 12.11.2021
(51) Int. Cl.: H02J 3/00, G06F 30/20

(54) **A METHOD FOR EVALUATING EXPECTED PERFORMANCE OF A WIND FARM**

(30) Priority: 01.12.2020 EP 20210957
(71) Applicant: Vestas Wind Systems A/S, 8200 Aarhus N (DK)
(72) Inventor: COVA ACOSTA, Miguel Angel, 8270 Højbjerg (DK); GUPTA, Piyush, 8240 Risskov (DK); ABILDGAARD, Hans, 6000 Kolding (DK)
(74) Representative: Vestas Patents Department

(57) **Abstract**

A method for evaluating expected performance of a wind farm (1) during a voltage event of a power grid (3), using a simulation tool comprising a model of the wind farm (1) and a model of the power grid (3), is provided. The simulation tool initiates a simulated voltage event, at time, t₀, and initiates simulation of a subsequent response to the voltage event by the wind farm (1). The simulation tool retrieves information regarding an initial voltage state of the model of the wind farm (1), at time, t₀, and predicts a final voltage state of the model of the wind farm (1), based on the retrieved information regarding the initial voltage state. At time, t₀, a simulated output current, I, of the wind farm (1) is lowered, based on the retrieved information regarding the initial voltage state and the predicted final voltage state, and a simulated output voltage, V, of the model of the wind farm (1), is monitored. The simulated output current, I, of the wind farm (1) is subsequently adjusted, based on the monitored simulated output voltage, V, while monitoring simulated output voltage, V, simulated output current, I, and/or simulated output power of the wind farm model. Expected performance of the wind farm (1) is evaluated, based on the simulated output voltage, V, simulated output current, I, and/or simulated output power.

## Description

### FIELD OF THE INVENTION

The invention relates to a method for evaluating expected performance of a wind farm during a voltage event of a power grid. The method according to the invention applies a simulation tool comprising a model of the wind farm and a model of the power grid. The invention further provides a simulation tool for use in such a method.

### BACKGROUND OF THE INVENTION

When establishing a wind farm, it is sometimes required that it is demonstrated how the wind farm will react to various contingencies in the power grid before the wind farm is actually connected to the power grid. To this end, simulations may be performed, applying appropriate models of the wind farm and the power grid.

During a grid contingency, e.g. in the form of a voltage event, such as a low voltage ride through (LVRT) event or a high voltage ride through (HVRT) event, abrupt changes in the voltage supplied from the wind farm to the power grid occur. Changes in supplied voltage are followed by a corresponding, opposite change in the current supplied from the wind farm to the power grid, in order to support the power grid during the contingency event.

In a real wind farm the changes in supplied voltage and current described above are continuous, even though the rate of change is high. However, when the behaviour described above is simulated, the changes take place in a stepwise manner. The time duration from one simulation step to a subsequent simulation step is a parameter which can be set during configuration of the simulation. Small steps provide simulations which are close to following the continuous real behaviour of the wind farm and the power grid. However, this comes at price of heavy processing loads.

Accordingly, during a simulated abrupt increase in voltage supplied from the wind farm to the power grid, the voltage change from one simulation step to a subsequent simulation step may be significant. This may result in the simulated current being based on a too low simulated voltage, and thereby the simulated current is higher than it would be in a real wind farm. This may result in spikes in the simulated current, as well as spikes in the simulated power, which would not occur in the real wind farm. Accordingly, inconsistencies between the behaviour of the real wind farm and the simulated behaviour may be introduced.

CN 102799722 B discloses a wind power plant low voltage ride-through capability emulation verification method. When the wind turbine voltage setpoint drops below 0.7 pu during failure, the active power of the wind turbine is reduced rapidly. The wind turbine stays connected to the power grid. An electrical simulation model is used for checking whether the wind power plant possesses low voltage ride-through capability.

### DESCRIPTION OF THE INVENTION

It is an object of embodiments of the invention to provide a method for evaluating expected performance of a wind farm during a voltage event, in which a simulated behaviour of the wind farm follows the behaviour of the real wind farm closer than prior art methods.

It is a further object of embodiments of the invention to provide a method for evaluating expected performance of a wind farm during a voltage event, in which spikes in simulated current are avoided.

According to a first aspect the invention provides a method for evaluating expected performance of a wind farm during a voltage event of a power grid, using a simulation tool, the wind farm comprising a plurality of wind turbines connected to the power grid, and the simulation tool comprising a model of the wind farm and a model of the power grid, the method comprising the steps of:
- causing a simulated voltage event in the model of the power grid, at a time, t₀,
- the simulation tool initiating the simulated voltage event, at time, t₀, and initiating simulation of a subsequent response to the voltage event by the wind farm, the response by the wind farm including transfer from an initial voltage state towards a final voltage state of the model of the wind farm,
- the simulation tool retrieving information regarding the initial voltage state of the model of the wind farm, at time, t₀, and predicting the final voltage state of the model of the wind farm, based on the retrieved information regarding the initial voltage state,
- at time, t₀, lowering a simulated output current, I, of the wind farm, based on the retrieved information regarding the initial voltage state and the predicted final voltage state, and monitoring a simulated output voltage, V, of the model of the wind farm, in response to the simulated voltage event,
- subsequently adjusting the simulated output current, I, of the wind farm, based on the monitored simulated output voltage, V, while monitoring simulated output voltage, V, simulated output current, I, and/or simulated output power of the wind farm model, and
- evaluating expected performance of the wind farm, based on the simulated output voltage, V, simulated output current, I, and/or simulated output power.

Thus, according to the first aspect, the invention provides a method for evaluating expected performance of a wind farm during a voltage event of a power grid. In the present context the term 'wind farm' should be interpreted to mean a plurality of wind turbines arranged within a specified geographical area, and which share some infrastructure, such as internal power grid, connection to an external power grid, substations, access roads, etc. The wind farm may further comprise a central power plant controller (PPC) being responsible for the overall control of the wind farm, such as ensuring that obligations towards the power grid are fulfilled, dispatching operation setpoints to the wind turbines, etc.

In the present context the term 'voltage event' should be interpreted to mean an event in the power grid, which causes the voltage of the power grid to exceed the boundaries of normal operation of the power grid, and which therefore requires measures to be taken by power producers and/or power consumers of the power grid in order to prevent instability of the power grid. Examples of such voltage events include low voltage ride through (LVRT) events and high voltage ride through (HVRT) events.

The method according to the first aspect of the invention is performed using a simulation tool, the simulation tool comprising a model of the wind farm and a model of the power grid. Accordingly, the behaviour of the wind farm during the voltage event is simulated, rather than using measurements obtained at the real wind farm. Thus, the method can be performed without operating the real wind farm and without the real wind farm being connected to the real power grid. For instance, the method may be performed before a new wind farm is connected to the power grid.

The model of the wind farm and the model of the power grid may form part of a single, combined model. As an alternative, the model of the wind farm and the model of the power grid may be separate models which interact with each other during the simulation.

In the method according to the first aspect of the invention, a simulated voltage event is caused in the model of the power grid, at a time, t₀. This may be performed manually by an operator performing or supervising the simulation. Alternatively, this may be performed automatically by the simulation tool, e.g. in a random manner. In any case, the information that the simulated voltage event will take place at time, t₀, is available in the simulation tool prior to the time, t₀.

At time, t₀, the simulation tool initiates the simulated voltage event, i.e. the model of the power grid simulates that the announced voltage event starts taking place at time, t₀. Furthermore, the simulation tool initiates simulation of a subsequent response by the wind farm to the initiated voltage event, i.e. the model of the wind farm simulates the behaviour of the real wind farm, in response to the voltage event. The response by the wind farm includes transfer from an initial voltage state towards a final voltage state of the model of the wind farm, the initial voltage state being the voltage state of the wind farm before the voltage event is initiated, and the final voltage state being the voltage state of the wind farm after possible measures in order to mitigate the voltage event have been taken by the wind turbines of the wind farm. The transfer in voltage state could, e.g., include an abrupt increase or decrease in the voltage level supplied by the wind farm to the power grid.

Furthermore, at time, t₀, the simulation tool retrieves information regarding the initial voltage state of the model of the wind farm, and predicts the final voltage state of the model of the wind farm, based on the retrieved information regarding the initial voltage state. Since the information that the voltage event will be initiated at time, t₀, is available in the simulation tool prior to time, t₀, the simulation tool can 'prepare' for the voltage event, in the sense that it can retrieve the initial voltage step exactly at time, t₀, or even immediately before time, t₀. Thereby the predicted final voltage state can also be obtained at time, t₀, or immediately after time, t₀. This allows the simulation tool to react fast to the simulated voltage event. Accordingly, the final voltage state is predicted purely from the initial voltage state, and without awaiting the actual simulation, and thereby the change in simulated output voltage towards the final voltage state which actually takes place when the simulation is running. However, the predicted final voltage state constitutes a qualified 'guess' on how the simulated voltage will change during the simulation, and it therefore allows the simulating tool to prepare for the expected transfer in voltage state, in particular if the expected transfer is of a kind which is expected to result in spikes in simulated output current, which would not be seen in actual output current from a real wind farm.

For instance, the initial voltage state may indicate whether or not the wind farm is currently in a 'fault ride through' state, i.e. whether or not the wind farm is operating at an increased or reduced voltage level, in order to mitigate a grid contingency. Furthermore, the initial voltage state may indicate a level of the voltage being supplied from the wind farm to the power grid. Based on such information, the simulation tool can perform an 'informed guess' regarding how the model of the wind farm will react when the voltage event is initiated at time, t₀, including whether the simulated voltage supplied by the wind farm to the power grid will increase or decrease, and how much.

Furthermore, at time, t₀, and based on the retrieved information regarding the initial voltage state and the predicted final voltage state, a simulated output current, I, of the wind farm is lowered. For instance, if the initial voltage state indicates that the modelled wind farm is already operating at a reduced voltage level, then it may be concluded that the voltage event which is initiated at time, t₀, will most likely cause an increase, possibly an abrupt increase, in the simulated output voltage level, which in turn should cause a decrease in the simulated output current. Thus, when this is the case, the simulated output current, I, is lowered immediately at time, t₀, and before an expected increase in the output voltage has been detected. Thereby it is prevented that the output current is simulated based on a too low voltage level, during an abrupt increase in simulated output voltage, and thereby the spikes in the simulated output current and the simulated output power, which would not be present in a real operating wind farm, are avoided.

On the other hand, in the case that the initial voltage state indicates that the modelled wind farm is not operating at a reduced voltage level, then it is less likely that the response to the initiated voltage event will cause an abrupt increase in simulated output voltage, and consequently a decrease in simulated output current. Therefore, in this case the simulated output current, I, may not be lowered at time, t₀.

Following the lowering of the output current, I, at time, t₀, the simulated output voltage, V, of the model of the wind farm, in response to the simulated voltage event, is monitored. Thereby it is monitored whether or not the voltage state of the wind farm model is in fact transferring towards the predicted final voltage state, in response to the simulated voltage event.

Subsequently, the simulated output current, I, of the wind farm is adjusted, based on the monitored simulated output voltage, V. Thus, if the simulated output voltage, V, is not changing as predicted, towards the predicted final voltage state, then the simulated output current, I, can be adjusted, in order to provide a simulation which follows the actual behaviour of the real wind farm closer.

For instance, if simulated output voltage, V, is lower than, or increases slower than, predicted when predicting the final voltage state, then the initial lowering of the simulated output current might have been too large, and therefore the simulated output current is, in this case, adjusted by increasing the simulated output current. On the other hand, if the simulated output voltage, V, is higher than, or increases faster than, predicted when predicting the final voltage state, then the initial lowering of the simulated output current may have been too small, and therefore the simulated output current is, in this case, adjusted by decreasing the simulated output current.

During this subsequent adjustment of the simulated output current, I, simulated output voltage, V, simulated output current, I, and/or simulated output power of the wind farm model is/are monitored.

Finally, expected performance of the wind farm is evaluated, based on the simulated output voltage, V, simulated output current, I, and/or simulated output power.

Thus, in the method according to the first aspect of the invention, an expected abrupt increase in simulated output voltage of the wind farm model, is handled by lowering the simulated output current, already at time, t₀, i.e. before the increase in output voltage is detected. Thereby it is avoided that the simulated output current of the wind farm 'overshoots' and creates spikes in the simulated output current as well as in the simulated output power of the wind farm model, due to steps in the simulation. Accordingly, the simulated behaviour of the wind farm model follows the actual behaviour of the real wind farm, in response to a voltage event of the power grid, in a closer manner, since such spikes would not occur when the real wind farm operates under an actually occurring similar voltage event. Thus, the simulated output provides a much better basis for determining whether or not the real wind farm performs appropriately in response to a given voltage event, including whether or not certain requirements from the power grid are fulfilled.

The step of predicting the final voltage state may be performed prior to time, t₀. As described above, the information that the voltage event will occur at time, t₀, is available prior to time, t₀. Thereby it is possible for the simulation tool to prepare in advance, thereby allowing the simulated output current, I, to be lowered exactly at time, t₀, or immediately thereafter, if this turns out to be necessary. Alternatively, the step of predicting the final voltage state may be performed at time, t₀. In any event, the final voltage state is predicted before the final voltage state is actually reached during the simulation, and it is predicted purely on the basis of the initial voltage state.

The step of monitoring a simulated output voltage, V, of the model of the wind farm, in response to the simulated voltage event, may comprise monitoring a time derivative of the simulated output voltage, dV/dt, and/or a total change in simulated output voltage, ΔV, from the initial voltage state to the final voltage state.

According to this embodiment, following the initiation of the voltage event and the lowering of the simulated output current, I, at time, t₀, the simulated output voltage is monitored by monitoring the time derivative of the simulated output voltage, dV/dt, and/or the total change in simulated output voltage, ΔV.

The time derivative, dV/dt, provides information regarding how the simulated output voltage changes in response to the simulated voltage event. For instance, the sign of the time derivative, dV/dt, indicates whether the simulated output voltage increases (positive time derivative) or decreases (negative time derivate). Furthermore, the magnitude of the time derivative, dV/dt, indicates how fast the simulated output voltage increases or decreases. Accordingly, the time derivative, dV/dt, of the simulated output voltage provides information regarding how the simulated output current, I, is expected to change in response to the changes in simulated output voltage, V, as well as how fast a reaction in the simulated output current, I, is required.

The total change in simulated output voltage, ΔV, provides information regarding how much, in total, the simulated output voltage, V, changes during the transfer from the initial voltage state to the final voltage state. This also indicates how much and how fast a change in simulated output current, I, may be expected.

Thus, the time derivative, dV/dt, as well as the total change, ΔV, provides information regarding how the simulated output current, I, is expected to change in response to the voltage event, and monitoring these parameters thereby allows early initiation of the expected changes in the simulated output current, I, and thereby ensuring that the unwanted overshoots or spikes in the simulated output current, I, are avoided.

The step of lowering a simulated output current, I, of the wind farm may comprise lowering the simulated output current, I, to a predefined level in the case that the initial voltage state is a fault ride through state, and maintaining the simulated output current, I, in the case that the initial voltage state is not a fault ride through state.

As described above, in the case that the initial voltage state is a fault ride through state, it is likely that the simulated output voltage will increase abruptly in response to the initiation of the simulated voltage event at time, t₀, thereby requiring a corresponding abrupt decrease in the simulated output current, I, and therefore the simulated output current, I, is lowered upfront in this case. However, when the initial voltage state is not a fault ride through state, such an abrupt increase in simulated output voltage, V, and abrupt decrease in simulated output current, I, are not expected, and therefore the simulated output current, I, is, in this case, maintained when initiating the simulation of the voltage event.

The step of subsequently adjusting the simulated output current, I, of the wind farm may comprise iteratively predicting the final voltage state, based on the monitored simulated output voltage, V, and adjusting the simulated output current, I, iteratively, based on the predicted final voltage state.

According to this embodiment, the simulated output current, I, may be adjusted several times from the voltage event is initiated at time, t₀, and until the final voltage state is reached. Thereby it is efficiently ensured that the simulated behaviour of the wind farm model closely follows the behaviour of the real wind farm, in response to a real voltage event.

The simulated voltage event may be a low voltage ride through (LVRT) event.

During a low voltage ride through (LVRT) event, the voltage of the power grid decreases to a voltage level which requires one or more of the power producers connected to the power grid to take actions in order to prevent instability of the power grid. For instance, a low voltage ride through (LVRT) event occurs when the voltage of the power grid falls below a certain threshold level. At a later point in time, the voltage of the power grid will once again increase to a level above the threshold level. When simulating a LVRT event, the changes in voltage may be simulated as abrupt changes. As described above, the simulated abrupt increase in voltage causes a corresponding abrupt decrease in the output current, I. When an LVRT event as described above is simulated using a method according to an embodiment of the invention, the simulated output current, I, is lowered immediately when the abrupt increase in simulated output voltage, V, is initiated, and thereby overshoots or spikes in the simulated output current, which would not be present when operating a real wind farm, are avoided.

As an alternative, the simulated voltage event may be a high voltage ride through (HVRT) event, or another kind of severe voltage event in the power grid.

The simulated output current may be a simulated reactive output current, I_{q}, and the simulated output power may be a simulated reactive output power, Q. This is particularly relevant in the case that the simulated voltage event is an LVTR event, since such events can be mitigated by adjusting the reactive current and/or the reactive power supplied to the power grid.

The model of the wind farm may comprise a plurality of wind turbine models, each wind turbine model corresponding to one of the wind turbines of the wind farm, and the step of lowering a simulated output current, I, of the wind farm may comprise lowering a simulated output current, I_{WT}, of at least some of the wind turbine models.

According to this embodiment, the individual wind turbines of the wind farm are modelled in the wind farm model. When the simulated output current, I, supplied from the wind farm to the power grid, is lowered, this is obtained by requesting at least some of the wind turbine models to lower their respective output currents, I_{WT}. This causes the total output current, I, from the entire wind farm to be lowered. Thus, the lowered output current, I, at wind farm level, is obtained by appropriately adjusting the output currents, I_{WT}, provided by the individual wind turbine models of the wind farm model.

According to a second aspect, the invention provides a simulation tool comprising a model of a power grid and a model of a wind farm, the wind farm comprising a plurality of wind turbines connected to the power grid, wherein the simulation tool is adapted to perform the method according to the first aspect of the invention.

Since the simulation tool according to the second aspect of the invention is adapted to perform the method according to the first aspect of the invention, the remarks set forth above with reference to the first aspect of the invention are equally applicable here.

### BRIEF DESCRIPTION OF THE DRAWINGS

The invention will now be described in further detail with reference to the accompanying drawings in which
Fig. 1 illustrates a wind farm connected to a power grid,
Fig. 2 is a flow chart illustrating a method according to an embodiment of the invention,
Fig. 3 illustrates simulated reactive power, simulated output voltage, and simulated output reactive current during a simulated voltage event, as a function of time, obtained by means of a prior art method, and
Fig. 4 illustrates simulated reactive power, simulated output voltage, and simulated output reactive current during a simulated voltage event, as a function of time, obtained by means of a method according to an embodiment of the invention.

### DETAILED DESCRIPTION OF THE DRAWINGS

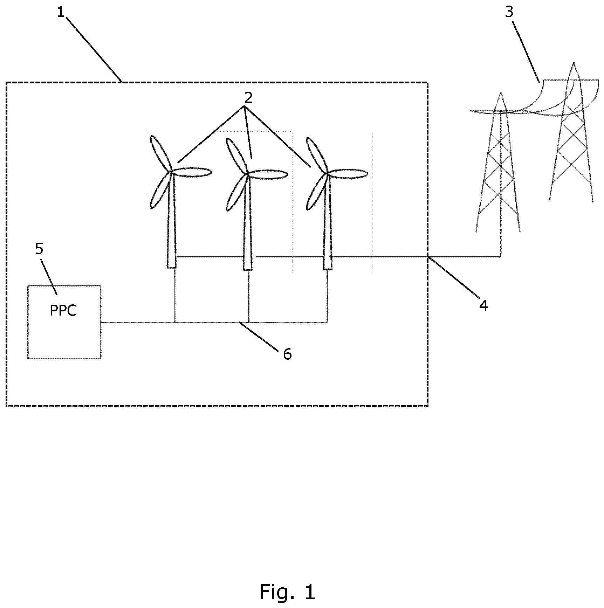

Fig. 1 illustrates a wind farm 1 comprising a plurality of wind turbines 2, three of which are shown. The wind turbines 2 are connected to a power grid 3 via a point of common coupling 4. Accordingly, the wind turbines 2 convert energy from the wind into electrical energy, which is supplied to the power grid 3, via the point of common coupling 4.

The wind farm 1 further comprises a power plant controller 5 which is communicatively connected to the wind turbines 2 via communication connection 6. Thus, the power plant controller 5 may receive operational data from the wind turbines 2, and the power plant controller 5 may dispatch control commands, e.g. in the form of setpoint values, to the wind turbines 2.

Before the wind farm 1 is connected to the power grid 3 for the first time, it may be required to demonstrate that the wind farm 1 will react appropriately to voltage events, such as low voltage ride through (LVRT) or high voltage ride through (HVRT) events of the power grid 3. To this end the performance of the wind farm 1 during such events may be evaluated by means of a method according to an embodiment of the invention, and using a simulation tool comprising a model of the wind farm 1 and a model of the power grid 3.

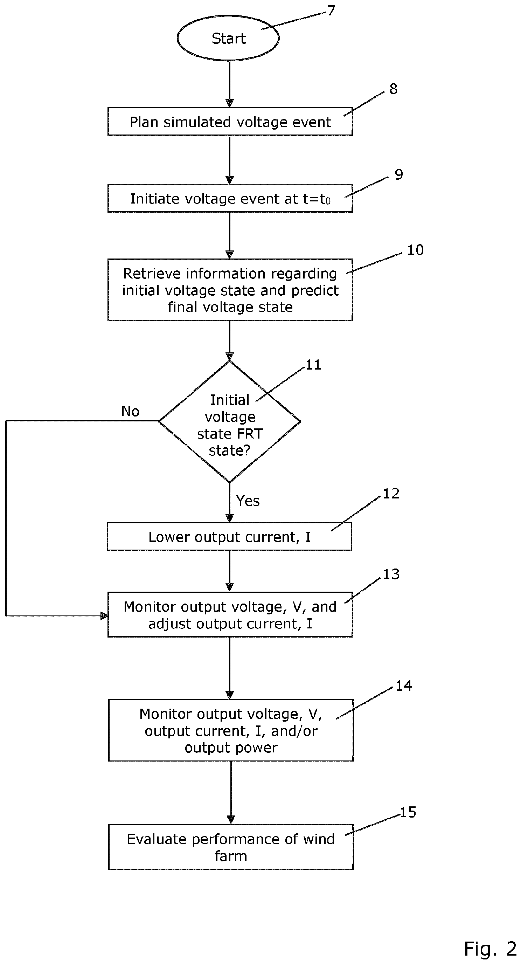

Fig. 2 is a flow chart illustrating a method according to an embodiment of the invention. The process is started at step 7. At step 8 a simulated voltage event in a model of a power grid forming part of a simulation tool is planned to take place at a future time, t₀. The voltage event could, e.g., be a low voltage ride through (LVRT) event.

At step 9, the time, t₀, has been reached, and the simulated voltage event is initiated by the simulation tool.

At step 10, also at time, t₀, the simulation tool retrieves information regarding an initial voltage state of the model of the wind farm. The retrieved information comprises information regarding whether or not the initial voltage state is a fault ride through (FRT) state. Furthermore, a final voltage state of the model of the wind farm is predicted, based on the retrieved information.

At step 11 it is investigated whether or not the initial voltage state of the model of the wind farm is a fault ride through (FRT) state. If this is the case, then it is likely that the planned simulated voltage event will cause the simulated output voltage, V, to increase abruptly, leading to a corresponding decrease in the simulated output current, I. Therefore, in this case, the process is forwarded to step 12, where the simulated output current, I, is lowered, already at time, t₀, or immediately thereafter, in order to prevent that the output current, I, is too high, due to the duration of the simulation steps, thereby avoiding overshoots or spikes in the simulated output current, I, and the simulated output power.

At step 13, the simulated output voltage, V, is monitored, and the simulated output current, I, is adjusted in accordance therewith. Thus, it is continuously evaluated whether or not the voltage state of the model of the wind farm is transferring towards the predicted final voltage state. If not, the simulated output current, I, is adjusted accordingly, and thereby the actual behaviour of the real wind farm is followed accurately by the simulation.

In the case that step 11 reveals that the initial voltage state of the model of the wind farm is not a fault ride through (FRT) state, then the process is forwarded directly to step 13, i.e. the simulated output voltage, V, is monitored and the simulated output current, I, is adjusted as described above, but without the initial lowering of the simulated output current, I.

At step 14, the simulated output voltage, V, the simulated output current, I, and/or the simulated output power is/are monitored, in order to monitor the simulated behaviour of the wind farm in response to the voltage event.

Finally, at step 15, the performance of the wind farm, in response to the voltage event, is evaluated based on the monitored simulated output voltage, V, simulated output current, I, and/or simulated output power.

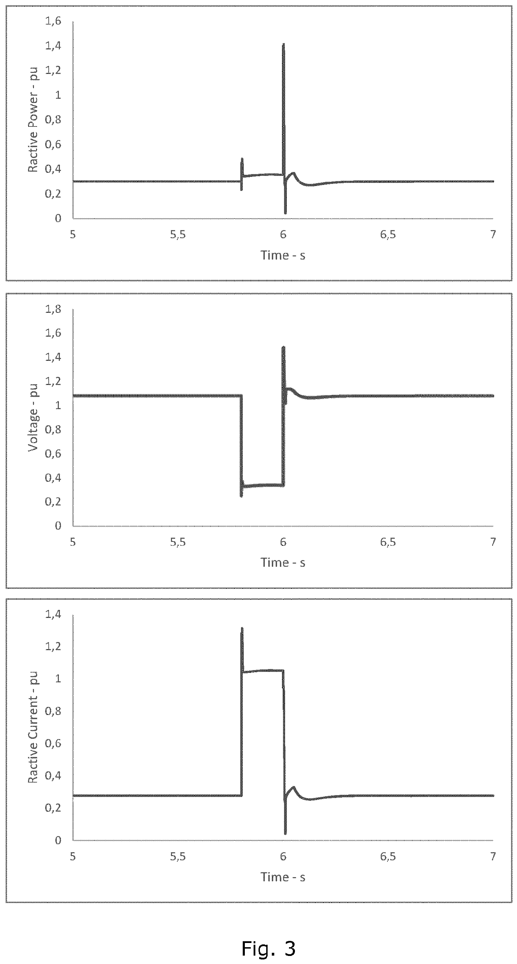

Fig. 3 illustrates simulated reactive power, simulated output voltage, and simulated output reactive current during a simulated voltage event, as a function of time, obtained by means of a prior art method.

A simulated voltage event in a power grid is initiated at approximately time=5.8 s, in which the simulated output voltage is decreased abruptly, and is maintained at a lower voltage level. Following the abrupt decrease in simulated output voltage, the simulated reactive output current increases abruptly, and is maintained at a higher current level, in order to support the power grid.

At approximately time=6.0 s, another simulated voltage event occurs, in which the simulated output voltage is increased abruptly to restore the initial voltage level. Following this, the simulated reactive output current decreases abruptly and restores the initial current level, since the increased reactive output current is no longer required in order to support the power grid.

However, since the simulation is performed in small time steps, rather than in a continuous manner, a time period corresponding to a simulation step may elapse from the simulated output voltage is abruptly decreased or increased, and until this is detected and a corresponding abrupt increase or decrease in the simulated reactive output current takes place. This results in spikes in the simulated reactive output current, and consequently in the simulated reactive power. In particular, it can be seen that a very large spike occurs in the simulated reactive power when the initial voltage and current levels are restored, approximately at time=6.0 s. These spikes are not 'real' in the sense that they would not occur when a real wind farm reacts to a similar voltage event in the power grid, where the control is continuous rather than stepwise.

Accordingly, the spikes represent undesired discrepancies between the behaviour of the simulation model of the wind farm and the behaviour of the real wind farm.

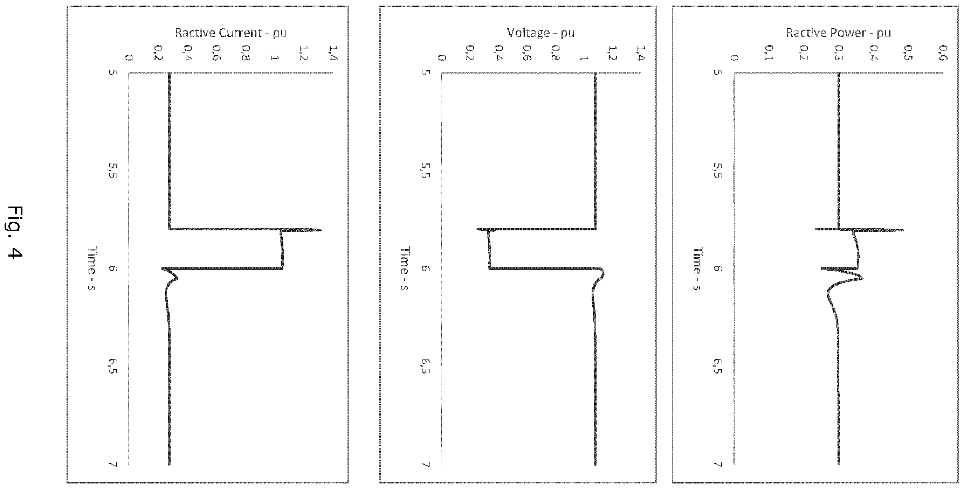

Fig. 4 illustrates simulated reactive power, simulated output voltage, and simulated output reactive current during a simulated voltage event, as a function of time, obtained by means of a method according to an embodiment of the invention.

A voltage event is simulated, essentially in the manner described above with reference to Fig. 3. However, in the situation illustrated in Fig. 4, the abrupt changes in the simulated reactive output current are performed substantially simultaneously with the abrupt changes in the simulated output voltage. This can be done because it is known in advance that a voltage event will occur, and it is possible to predict, or provide a qualified guess on, a final voltage state of the wind farm, following the voltage event. As a consequence, the delay in the response by the simulated reactive output current is considerably reduced. It can be seen from Fig. 4, that this significantly reduces the spikes in the simulated reactive output current and the simulated reactive power. In particular, the large spike which occurred approximately at time=6.0 s in the simulated reactive power of Fig. 3 is essentially eliminated in Fig. 4. Accordingly, the simulation reflects the behaviour of the real wind farm in a much more accurate manner.

## Claims

1. A method for evaluating expected performance of a wind farm (1) during a voltage event of a power grid (3), using a simulation tool, the wind farm (1) comprising a plurality of wind turbines (2) connected to the power grid (3), and the simulation tool comprising a model of the wind farm (1) and a model of the power grid (3), the method comprising the steps of:
- causing a simulated voltage event in the model of the power grid (3), at a time, t₀,
- the simulation tool initiating the simulated voltage event, at time, t₀, and initiating simulation of a subsequent response to the voltage event by the wind farm (1), the response by the wind farm (1) including transfer from an initial voltage state towards a final voltage state of the model of the wind farm (1),
- the simulation tool retrieving information regarding the initial voltage state of the model of the wind farm (1), at time, t₀, and predicting the final voltage state of the model of the wind farm (1), based on the retrieved information regarding the initial voltage state,
- at time, t₀, lowering a simulated output current, I, of the wind farm (1), based on the retrieved information regarding the initial voltage state and the predicted final voltage state, and monitoring a simulated output voltage, V, of the model of the wind farm (1), in response to the simulated voltage event,
- subsequently adjusting the simulated output current, I, of the wind farm (1), based on the monitored simulated output voltage, V, while monitoring simulated output voltage, V, simulated output current, I, and/or simulated output power of the wind farm model, and
- evaluating expected performance of the wind farm (1), based on the simulated output voltage, V, simulated output current, I, and/or simulated output power.

2. A method according to claim 1, wherein the step of predicting the final voltage state is performed prior to time, t₀.

3. A method according to claim 1 or 2, wherein the step of monitoring a simulated output voltage, V, of the model of the wind farm (1), in response to the simulated voltage event, comprises monitoring a time derivative of the simulated output voltage, dV/dt, and/or a total change in simulated output voltage, ΔV, from the initial voltage state to the final voltage state.

4. A method according to any of the preceding claims, wherein the step of lowering a simulated output current, I, of the wind farm (1) comprises lowering the simulated output current, I, to a predefined level in the case that the initial voltage state is a fault ride through state, and maintaining the simulated output current, I, in the case that the initial voltage state is not a fault ride through state.

5. A method according to any of the preceding claims, wherein the step of subsequently adjusting the simulated output current, I, of the wind farm (1) comprises iteratively predicting the final voltage state, based on the monitored simulated output voltage, V, and adjusting the simulated output current, I, iteratively, based on the predicted final voltage state.

6. A method according to any of the preceding claims, wherein the simulated voltage event is a low voltage ride through (LVRT) event.

7. A method according to any of the preceding claims, wherein the simulated output current is a simulated reactive output current, I_{q}, and wherein the simulated output power is a simulated reactive output power, Q.

8. A method according to any of the preceding claims, wherein the model of the wind farm (1) comprises a plurality of wind turbine models, each wind turbine model corresponding to one of the wind turbines (2) of the wind farm (1), and wherein the step of lowering a simulated output current, I, of the wind farm (1) comprises lowering a simulated output current, I_{WT}, of at least some of the wind turbine models.

9. A simulation tool comprising a model of a power grid (3) and a model of a wind farm (1), the wind farm (1) comprising a plurality of wind turbines (2) connected to the power grid (3), wherein the simulation tool is adapted to perform the method according to any of the preceding claims.
